# FASCICULE DE BREVET EUROPEEN

(11) **EP 4 006 654 B1**
(45) Date de publication et mention de la délivrance du brevet: **01.01.2025**
(21) Numéro de dépôt: 20210655.5
(22) Date de dépôt: 30.11.2020
(51) Int. Cl.: G04R 60/08, G04R 20/28, G04B 19/28, G04B 47/00, G04B 47/04

(54) **BOITE DE MONTRE COMPRENANT UN DISPOSITIF DE COMMUNICATION EN CHAMP PROCHE**
ARMBANDUHRENGEHÄUSE, DAS EINE VORRICHTUNG ZUR NAHFELDKOMMUNIKATION UMFASST
WATCH CASE COMPRISING A NEAR FIELD COMMUNICATION DEVICE

(43) Date de publication de la demande: 01.06.2022
(73) Titulaire: The Swatch Group Research and Development Ltd, 2074 Marin (CH)
(72) Inventeur: RANDJELOVIC, Zoran, 2035 Corcelles (CH); ETIENNE, Jean-Daniel, 2206 Les Geneveys-sur-Coffrane (CH); SCORDILIS, Thierry, 2036 Cormondrèche (CH)
(74) Mandataire: ICB SA

(56) Documents cités:
- EP-A1- 0 844 685
- EP-A1- 3 141 969
- EP-A1- 3 343 450

## Description

### Domaine technique de l'invention

L'invention concerne une boîte de montre comprenant un dispositif de communication en champ proche, ainsi qu'une montre équipée d'une telle boîte.

### Arrière-plan technologique

On connait dans l'état de la technique, des objets portables de paiement sans contact tels que des montres qui sont aptes à participer à la réalisation d'un paiement électronique. De telles montres comportent classiquement des moyens de communication en champ proche composés d'une puce électronique, ou circuit intégré, reliée électriquement à une antenne. La plupart du temps, ces moyens n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

Toutefois ces moyens de communication en champ proche ont une durée de vie limitée par l'espérance de vie du circuit intégré plus particulièrement de celle de sa partie "coffre-fort électronique" qui ne doit pas excéder dix ans. En effet, passé cette durée ces moyens de communication ne permettent plus la réalisation de paiement électronique et doivent donc être remplacés. Au regard de l'agencement particulier de ces moyens de communication dans ces montres de l'état de la technique, les opérations de maintenance devant conduire à de tels remplacements sont souvent complexes voire impossibles et aussi coûteuses car elles peuvent notamment nécessiter le remplacement d'autres pièces de la montre qui sont associées à ces moyens de communication.

L'état de l'art n'offre pas de solution permettant de surmonter de tels inconvénients, il existe par conséquent un besoin de proposer une alternative aux solutions existantes.

Les documents EP 0 844 685 A1 et EP 3 343 450 A1 divulguent des montres comportant des dispositifs de communication sans fils intégrés à l'intérieur de lunettes creuses.

### Résumé de l'invention

La présente invention a pour but de pallier les inconvénients de l'art antérieur en proposant de fournir une montre dont la boite comprend une lunette qui peut être facilement et rapidement démontée pour assurer la maintenance du dispositif de communication en champ proche qu'elle contient sans impacter l'intégrité ni l'étanchéité du produit.

Dans ce dessein, un aspect de l'invention concerne une boite de montre telle que définie dans la revendication indépendante 1 annexée. Des réalisations préférées de cette boite sont définies dans les revendications dépendantes 2 à 12.

Dans un autre aspect, l'invention concerne une montre comportant une telle boite comprenant un dispositif de communication en champ proche.

Avantageusement, la montre est étanche.

### Brève description des figures

Les buts, avantages et caractéristiques...
- la figure 1 est une représentation schématique d'une montre pourvue d'une boite comprenant une lunette dans laquelle est agencé un dispositif de communication en champ proche, selon un mode de réalisation de l'invention ;
- la figure 2 est une vue de dessus d'une représentation en perspective de la lunette, selon le mode de réalisation de l'invention ;
- la figure 3 est une vue de dessous d'une représentation en perspective de la lunette, selon le mode de réalisation de l'invention, et
- la figure 4 est une vue éclatée d'une représentation en perspective de la lunette, selon le mode de réalisation de l'invention.

### Description détaillée de l'invention

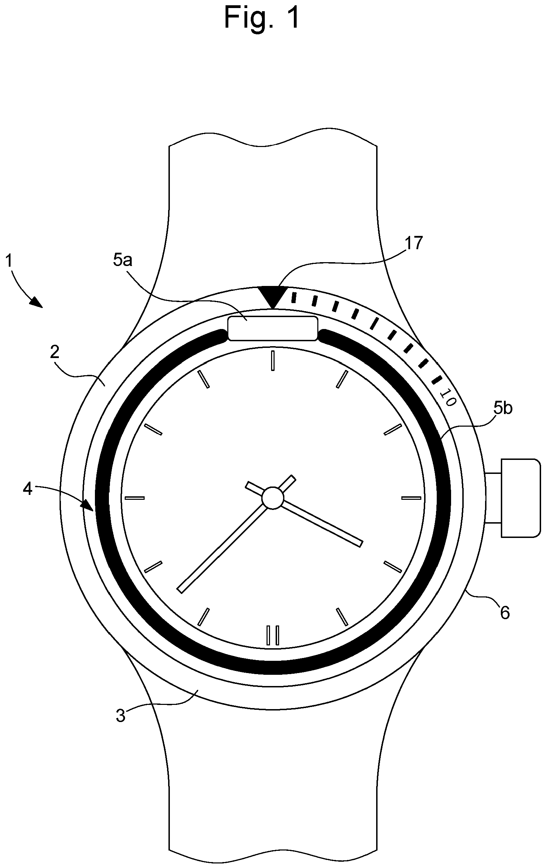

La figure 1 est une représentation schématique d'une montre 1 comprenant une boite 2 comportant une carrure 6 et une lunette 3 creuse pourvue d'un dispositif de communication 4 en champ proche de type NFC (acronyme de « Near Field Communication »). Un tel dispositif de communication 4 en champ proche peut participer à la réalisation d'un paiement électronique sans contact. Dans ce contexte, un tel dispositif 4 est alors un dispositif de paiement électronique sans contact.

Ce dispositif de communication 4 en champ proche comprend au moins un microcircuit 5a qui peut être un circuit intégré et une antenne 5b de préférence de forme circulaire pouvant être bobinée en matériau électriquement conducteur, comme par exemple du cuivre ou réalisée sur un circuit imprimé (ou PCB de l'anglais « Printed Circuit Board ») et qui est reliée audit microcircuit 5a.

Dans cette configuration, la montre 1 selon l'invention comprend une lunette 3 qui peut être facilement démontée/désassemblée notamment pour changer le dispositif de communication 4 en champ proche qui serait défectueux et ce, sans endommager cette lunette 3 et par extension la boite 2 de montre 1. De plus, cette lunette 3 participe aussi à permettre d'intégrer un tel dispositif 4 dans cette montre 1 de manière plus simple et plus économique. On notera qu'une telle lunette 3 peut être unidirectionnelle ou bidirectionnelle ou encore une lunette non tournante.

Cette montre 1 peut être une montre bracelet ou une montre mécanique ou encore une montre connectée. Cette montre 1 peut être étanche et dans cette configuration elle peut être une montre sportive telle qu'une montre de plongée.

Dans cette montre 1, la boite 2 comprend en premier lieu, une carrure 6. La carrure 6 peut être réalisée en métal (par ex. en acier, de préférence inoxydable), ou dans un matériau synthétique (par ex. dans un matériau composite comprenant une matrice polymère chargée de fibres, typiquement de carbone) ou encore dans un matériau diélectrique, céramique et/ou électriquement non conducteur. Comme on le voit sur la figure 1, la carrure 6 est à contour circulaire. La carrure 6 définit un espace intérieur configuré pour accueillir un mouvement d'horlogerie. Cette carrure 6 comprend des cornes sur lesquelles est destiné à venir s'accrocher un bracelet pour le port de la montre 1 au poignet. Si l'on fait abstraction des cornes, la carrure 6 présente une symétrie générale de révolution autour d'un axe central X.

Cette boite 2 de montre 1 comprend en deuxième lieu, la lunette 3 qui est montée de manière amovible sur la carrure 6. Cette lunette 3 est en effet montée sur cette carrure 6 à partir d'au moins un élément de fixation amovible notamment de type clippage ou encore emboitage. Un tel élément de fixation permet d'assembler et désassembler la lunette 3 de la carrure 6 facilement, rapidement et simplement sans les endommager afin d'assurer par exemple la maintenance du dispositif de communication 4 en champ proche.

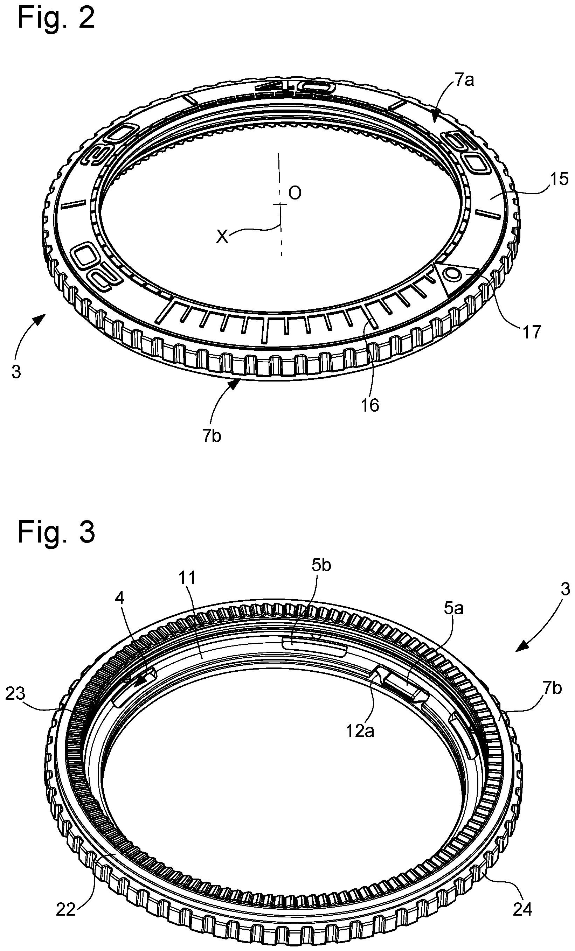

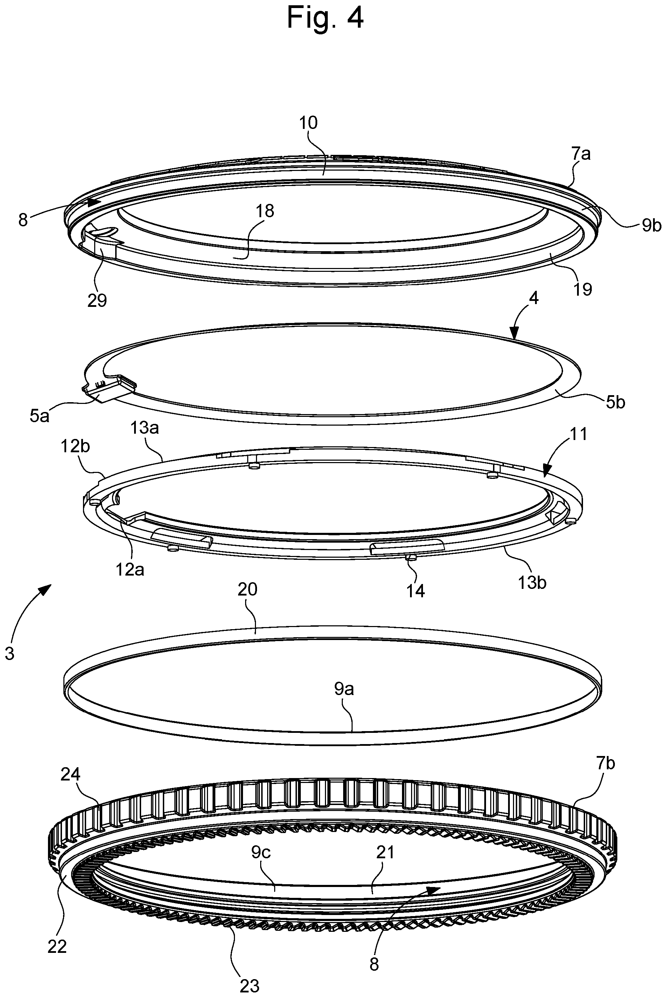

Sur les figures 1 à 4, cette lunette 3 présente une forme essentiellement annulaire. Elle comprend deux éléments d'habillage 7a, 7b, un dispositif de fixation réversible 8 et un élément de support amovible 11 du dispositif de communication 4 en champ proche. Plus précisément, cette lunette 3 est formée par l'assemblage du premier élément d'habillage 7a avec le deuxième élément d'habillage 7b de manière à définir un logement dans lequel est agencé le dispositif de communication 4 en champ proche. En particulier, on notera que dans cette configuration l'élément de support 11 est pris en sandwich entre ces deux éléments d'habillage 7a, 7b. Dans cette lunette 3, le dispositif de fixation réversible 8 comprend une zone de fixation 9b et une zone de liaison 9c ainsi qu'un élément de serrage 9a que nous décrirons par la suite. Rappelons qu'un tel dispositif 8 participe à l'assemblage des premier et deuxième éléments d'habillage 7a, 7b par un emboîtage par serrage.

Le premier élément d'habillage 7a comprend une face externe 15 sur laquelle est apposée ou formée une graduation 16. Dans l'exemple illustré, la graduation comprend des index dont certains sont figuratifs et se présentent sous forme de chiffres (de préférence arabes). L'un des index, dit index de zéro 17, se présente sous forme d'un triangle pointant vers l'intérieur de ce premier élément d'habillage 7a, pour former un repère d'origine à partir duquel l'utilisateur mesure, en minutes, le temps écoulé à partir d'un instant initial prédéterminé correspondant à une position angulaire précise de la lunette 3 par rapport à la carrure 6. Ce premier élément d'habillage 7a comprend aussi un face interne 18, une paroi périphérique interne 19 et une paroi périphérique externe.

Ce premier élément d'habillage 7a comprend une zone d'agencement 20 dudit au moins un microcircuit 5a du dispositif de communication 4 qui est ménagée à la fois dans une partie de la paroi périphérique interne 19 et une partie de la face interne 18. Cette zone d'agencement 20 est de préférence localisée derrière l'index de zéro 17.

Le premier élément d'habillage 7a comprend également la zone de fixation 9b réversible comprenant une rainure 10 définie sur sa paroi périphérique externe. Une telle rainure 10 est spécifiquement configurée pour recevoir l'élément de serrage 9a.

Cet élément de serrage 9a peut être un joint comprimable qui est de plus petite taille que le pourtour (circonférence) de la rainure 10. Un tel élément de serrage 9a est donc agencé dans la rainure 10 en étant étiré. Malgré sa plus petite circonférence, l'élément de serrage 9a trouve sa place dans cette rainure 10 grâce à ses propriétés élastiques, qui lui permettent d'être détendu et qui une fois placé dans la rainure 10 se rétrécira pour se plaquer contre la paroi périphérique externe dans la rainure 10.

Cette zone de fixation 9b réversible est apte à coopérer avec la zone de liaison 9c réversible définie sur une paroi périphérique interne 21 du deuxième élément d'habillage 7b de la lunette 3. Cette zone de liaison 9c est apte à coopérer avec une surface externe 20 de l'élément de serrage 9a monté dans la rainure 10 de la zone de fixation 9b afin de relier de manière réversible le premier élément d'habillage 7a avec le deuxième élément d'habillage 7b. On notera que la zone de liaison 9c est susceptible de coopérer par frottement avec la surface externe 20 de l'élément de serrage 9a agencé dans la rainure 10.

Dans cette configuration, le diamètre reliant deux points de la surface externe 20 de l'élément de serrage 9a monté sur le premier élément d'habillage 7a est sensiblement supérieur ou strictement supérieur au diamètre reliant deux points de la zone de liaison 9c du deuxième élément d'habillage 7b. On notera que le diamètre reliant deux points de la rainure 10 du premier élément d'habillage 7a est sensiblement inférieur ou strictement inférieur au diamètre reliant deux points de la zone de liaison 9c du deuxième élément d'habillage 7b. En outre, on comprend que le diamètre du premier élément d'habillage 7a dépourvu de l'élément de serrage 9a, est sensiblement inférieur ou strictement inférieur à celui du deuxième élément d'habillage 7b.

Le deuxième élément d'habillage 7b comprend une face interne qui est contiguë à sa paroi périphérique interne 21. Cette face interne est notamment configurée pour être une face d'appui de l'élément de support 11 de la lunette 3 lorsque les premier et deuxième éléments d'habillage 7a, 7b sont assemblés. Ce deuxième élément d'habillage 7b comporte une face externe 22 opposée à la face interne et qui s'étend en regard de la carrure 6, et plus précisément en regard d'une partie de la carrure 6 prévue pour la fixation amovible de la lunette 3. Cette face externe 22 comprend une couronne dentée 23 de cette lunette 3 qui sert à l'indexage angulaire de la lunette 3 par rapport à la carrure 6. Cette couronne dentée 23 comprend une série périphérique de dents dont chaque dent est asymétrique et comprend une rampe inclinée et une surface d'arrêt verticale, éventuellement reliées par un plateau horizontal.

Ce deuxième élément d'habillage 7b est aussi pourvu d'une paroi périphérique externe sur laquelle est définie une zone de préhension 24 de la lunette 3.

Ainsi que nous l'avons évoqué, la lunette 3 comprend l'élément de support 11 amovible du dispositif de communication 4 en champ proche. Plus précisément, cet élément de support 11 est pourvu d'une face supérieure 13a comportant une zone de réception 12b de l'antenne 5b dudit dispositif de communication 4. Cette zone de réception 12b sur laquelle est agencée ladite antenne 5b est notamment comprise dans un plan incliné. Cet élément de support 11 comprend aussi un évidement 12a, ou une ouverture traversante, dans lequel est susceptible d'être agencé en tout ou partie ledit au moins un microcircuit 5a.

Dans une variante, la zone de réception 12b peut comprendre/former un écran magnétique de protection comme la ferrite en étant couverte d'une couche de matériau à base de la ferrite. Dans ce contexte, la partie de la paroi périphérique interne et la face interne du deuxième élément d'habillage 7b localisées à proximité dudit au moins un microcircuit 5a, peuvent également comprendre une telle couche de matériau afin de former un écran magnétique avec cet élément de support 11.

En outre cet élément de support 11 comprend une face inférieure 13b comprenant une pluralité de pieds 14 susceptibles de prendre appui sur la face interne du deuxième élément d'habillage 7b de cette lunette 3 lorsque ce deuxième élément d'habillage 7b est assemblé au premier élément d'habillage 7a.

Dans cette lunette 3, les premier et deuxième éléments d'habillage 7a, 7b, l'élément de serrage 9a et l'élément de support 11 sont adaptés au fonctionnement du dispositif de communication 4 en champ proche en étant fabriqués en des matériaux diélectriques et électriquement non conducteurs, comme par exemple le plastique, la céramique, ou tout autre matériau de synthèse.

Par ailleurs, le dispositif de communication 4 comprend un enrobage de matière étanche qui le rend imperméable à l'eau et à l'humidité. Cet enrobage de matière est aussi apte à le rendre résistant à des pressions élevées pouvant être rencontrées lors de plongées effectuées par le porteur de la montre 1. Cet enrobage de matière peut comprendre des couches organiques ou inorganiques ou une combinaison de ces deux types de couches.

On comprendra que diverses modifications et/ou améliorations et/ou combinaisons évidentes pour l'homme du métier peuvent être apportées aux différents modes de réalisation de l'invention exposée cidessus sans sortir du cadre de l'invention définie par les revendications annexées.

## Revendications

1. Boite (2) de montre (1) comportant une carrure (6) et une lunette (3) creuse pourvue d'un dispositif de communication (4) en champ proche comprenant au moins un microcircuit (5a) relié à une antenne (5b), ladite lunette (3) étant montée de manière amovible sur ladite carrure (6) et formée d'un assemblage de deux éléments d'habillage (7a, 7b) susceptibles de définir un logement dans lequel est agencé ledit dispositif de communication (4) en champ proche, lesdits premier et deuxième éléments d'habillage (7a, 7b) de la lunette (3) étant assemblés l'un avec l'autre à partir d'un dispositif de fixation réversible (8), **caractérisée en ce que** le premier élément d'habillage (7a) comprend une zone de fixation (9b) réversible comprenant une rainure (10) définie sur une paroi périphérique externe du premier élément d'habillage (7a), ladite rainure (10) étant configurée pour recevoir un élément de serrage (9a) dudit dispositif de fixation réversible (8).

2. Boite (2) selon la revendication précédente, **caractérisée en ce que** l'élément de serrage (9a) est un joint comprimable.

3. Boite (2) selon l'une quelconque des revendications précédentes, **caractérisée en ce que** ledit deuxième élément d'habillage (7b) comprend une zone de liaison réversible (9c) qui est susceptible de coopérer par frottement avec un élément de serrage (9a) agencé dans une rainure (10) comprise dans le premier élément d'habillage (7a).

4. Boite (2) selon l'une quelconque des revendications précédentes, **caractérisée en ce que** la lunette (3) comprend un élément de support amovible (11) du dispositif de communication en champ proche (4).

5. Boite (2) selon la revendication précédente, **caractérisée en ce que** l'élément de support (11) comprend sur sa face supérieure (13a) une zone de réception (12b) notamment en plan inclinée susceptible de recevoir ladite antenne (5b).

6. Boite (2) selon la revendication précédente, **caractérisée en ce que** la zone de réception (12b) de l'élément de support (11) comprend ou est formée d'un écran magnétique de protection comme la ferrite.

7. Boite (2) selon l'une quelconque des revendications 4 à 6, **caractérisée en ce que** l'élément de support (11) comprend un évidement (12a) dans lequel est susceptible d'être agencé en tout ou partie ledit au moins un microcircuit (5a).

8. Boite (2) selon l'une quelconque des revendications 4 à 7, **caractérisée en ce que** l'élément de support (11) comprend sur sa face inférieure (13b) au moins deux pieds (14) susceptibles de prendre appui sur une face interne (15) du deuxième élément d'habillage (7b) de la lunette (3) lorsque ce deuxième élément d'habillage (7b) est assemblé au premier élément d'habillage (7a).

9. Boite (2) selon la revendication précédente, **caractérisée en ce que** les premier et deuxième éléments d'habillage (7a, 7b), l'élément de support amovible (11) et l'élément de serrage (9a) sont réalisés en au moins un matériau diélectrique et/ou électriquement non conducteur.

10. Boite (2) selon l'une quelconque des revendications précédentes, **caractérisée en ce que** ladite lunette (3) est fixée sur la carrure (6) à partir d'au moins un élément de fixation amovible notamment de type clippage.

11. Boite (2) selon l'une quelconque des revendications précédentes, **caractérisée en ce que**, le dispositif de communication (4) en champ proche comprend un enrobage de matière étanche susceptible de rendre ledit dispositif (4) imperméable à l'eau et/ou à l'humidité.

12. Boite (2) selon l'une quelconque des revendications précédentes, **caractérisée en ce que** le dispositif de communication (4) en champ proche est un dispositif de paiement électronique sans contact.

13. Montre (1) comportant une boite (2) comprenant un dispositif de communication (4) en champ proche, selon les revendications 1 à 12.

14. Montre (1) selon la revendication précédente, **caractérisée en ce qu'**elle est étanche.

## Patentansprüche

1. Gehäuse (2) einer Uhr (1), das einen Mittelteil (6) und eine hohle Lünette (3) beinhaltet, die mit einer Nahfeld-Kommunikationsvorrichtung (4) versehen ist, die mindestens einen mit einer Antenne (5b) verbundenen Mikroschaltkreis (5a) umfasst, wobei die Lünette (3) abnehmbar auf dem Mittelteil (6) montiert ist, und aus einem Zusammenbau von zwei Verkleidungselementen (7a, 7b) gebildet ist, die eine Aufnahme definieren können, in der die Nahfeld-Kommunikationsvorrichtung (4) angeordnet ist, wobei das erste und zweite Verkleidungselement (7a, 7b) der Lünette (3) ausgehend von einer umkehrbaren Befestigungsvorrichtung (8) miteinander zusammengebaut sind, **dadurch gekennzeichnet, dass** das erste Verkleidungselement (7a) einen umkehrbaren Befestigungsbereich (9b) umfasst, der eine Nut (10) umfasst, die an einer äußeren Umfangswand des ersten Verkleidungselements (7a) definiert ist, wobei die Nut (10) konfiguriert ist, um ein Klemmelement (9a) der umkehrbaren Befestigungsvorrichtung (8) aufzunehmen.

2. Gehäuse (2) nach dem vorstehenden Anspruch, **dadurch gekennzeichnet, dass** das Klemmelement (9a) eine komprimierbare Dichtung ist.

3. Gehäuse (2) nach einem der vorstehenden Ansprüche, **dadurch gekennzeichnet, dass** das zweite Verkleidungselement (7b) einen umkehrbaren Verbindungsbereich (9c) umfasst, der durch Reibung mit einem Klemmelement (9a) zusammenwirken kann, das in einer Nut (10) angeordnet ist, die im ersten Verkleidungselement (7a) umfasst ist.

4. Gehäuse (2) nach einem der vorstehenden Ansprüche, **dadurch gekennzeichnet, dass** die Lünette (3) ein abnehmbares Trägerelement (11) für die Nahfeld-Kommunikationsvorrichtung (4) umfasst.

5. Gehäuse (2) nach dem vorstehenden Anspruch, **dadurch gekennzeichnet, dass** das Trägerelement (11) auf seiner Oberseite (13a) einen Empfangsbereich (12b) insbesondere als geneigte Ebene umfasst, der die Antenne (5b) aufnehmen kann.

6. Gehäuse (2) nach dem vorstehenden Anspruch, **dadurch gekennzeichnet, dass** der Aufnahmebereich (12b) des Trägerelements (11) eine magnetische Abschirmung wie Ferrit umfasst oder daraus gebildet ist.

7. Gehäuse (2) nach einem der Ansprüche 4 bis 6, **dadurch gekennzeichnet, dass** das Trägerelement (11) eine Aussparung (12a) umfasst, in der der mindestens eine Mikroschaltkreis (5a) ganz oder teilweise angeordnet werden kann.

8. Gehäuse (2) nach einem der Ansprüche 4 bis 7, **dadurch gekennzeichnet, dass** das Trägerelement (11) auf seiner Unterseite (13b) mindestens zwei Füße (14) umfasst, die auf einer Innenseite (15) des zweiten Verkleidungselements (7b) der Lünette (3) aufliegen können, wenn dieses zweite Verkleidungselement (7b) mit dem ersten Verkleidungselement (7a) zusammengebaut wird.

9. Gehäuse (2) nach dem vorstehenden Anspruch, **dadurch gekennzeichnet, dass** das erste und zweite Verkleidungselement (7a, 7b), das abnehmbare Trägerelement (11) und das Klemmelement (9a) aus mindestens einem dielektrischen und/oder elektrisch nicht leitfähigen Werkstoff hergestellt sind.

10. Gehäuse (2) nach einem der vorstehenden Ansprüche, **dadurch gekennzeichnet, dass** die Lünette (3) ausgehend von mindestens einem abnehmbaren Befestigungselement, insbesondere vom Typ Clip, am Mittelteil (6) befestigt ist.

11. Gehäuse (2) nach einem der vorstehenden Ansprüche, **dadurch gekennzeichnet, dass** die Nahfeld-Kommunikationsvorrichtung (4) einen Verguss aus dichtem Werkstoff umfasst, der die Vorrichtung (4) für Wasser und/oder Feuchtigkeit undurchlässig machen kann.

12. Gehäuse (2) nach einem der vorstehenden Ansprüche, **dadurch gekennzeichnet, dass** die Nahfeld-Kommunikationsvorrichtung (4) eine kontaktlose elektronische Zahlungsvorrichtung ist.

13. Uhr (1), die ein Gehäuse (2) beinhaltet, das eine Nahfeld-Kommunikationsvorrichtung (4) nach den Ansprüchen 1 bis 12 umfasst.

14. Uhr (1) nach dem vorstehenden Anspruch, **dadurch gekennzeichnet, dass** sie dicht ist.

## Claims

1. A watch (1) case (2) including a middle (6) and a hollow bezel (3) provided with a near-field communication device (4) comprising at least one microcircuit (5a) connected to an antenna (5b), said bezel (3) being removably mounted on said middle (6) and formed by an assembly of two lining elements (7a, 7b) that could define a housing within which said near-field communication device (4) is arranged, said first and second lining elements (7a, 7b) of the bezel (3) being assembled together by means of a reversible fastening device (8), **characterised in that** the first lining element (7a) comprises a reversible fastening area (9b) comprising a groove (10) defined on an outer peripheral wall of the first lining element (7a), said groove (10) being configured so as to receive a tightening element (9a) of said reversible fastening device (8).

2. The case (2) according to the preceding claim, **characterised in that** the tightening element (9a) is a compressible seal.

3. The case (2) according to any one of the preceding claims, **characterised in that** said second lining element (7b) comprises a reversible connecting area (9c) that could cooperate by friction with a tightening element (9a) arranged in a groove (10) comprised within the first lining element (7a).

4. The case (2) according to any one of the preceding claims, **characterised in that** the bezel (3) comprises a removable support element (11) of the near-field communication device (4).

5. The case (2) according to the preceding claim, **characterised in that** the support element (11) comprises over its upper face (13a) a reception area (12b) in particular in an inclined plane that could receive said antenna (5b).

6. The case (2) according to the preceding claim, **characterised in that** the reception area (12b) of the support element (11) comprises or is formed by a protective magnetic screen such as ferrite.

7. The case (2) according to any one of claims 4 to 6, **characterised in that** the support element (11) comprises a recess (12a) within which said at least one microcircuit (5a) could be completely or partially arranged.

8. The case (2) according to any one of claims 4 to 7, **characterised in that** the support element (11) comprises over its lower face (13b) at least two feet (14) that could bear on an inner face (15) of the second lining element (7b) of the bezel (3) when this second lining element (7b) is assembled to the first lining element (7a).

9. The case (2) according to the preceding claim, **characterised in that** the first and second lining elements (7a, 7b), the removable support element (11) and the tightening element (9a) are made of at least one dielectric and/or electrically non-conductive material.

10. The case (2) according to any one of the preceding claims, **characterised in that** said bezel (3) is fastened on the middle (6) by means of at least one removable fastening element in particular a clipping-type one.

11. The case (2) according to any one of the preceding claims, **characterised in that**, the near-field communication device (4) comprises a sealing material coating that could make said device (4) waterproof and/or moistureproof.

12. The case (2) according to any one of the preceding claims, **characterised in that** the near-field communication device (4) is a contactless electronic payment device.

13. A watch (1) including a case (2) comprising a near-field communication device (4), according to claims 1 to 12.

14. The watch (1) according to the preceding claim, **characterised in that** it is water-resistant.
